# EUROPEAN PATENT SPECIFICATION

(11) **EP 3 312 074 B1**
(45) Date of publication and mention of the grant of the patent: **03.12.2025**
(21) Application number: 17196380.4
(22) Date of filing: 13.10.2017
(51) Int. Cl.: B62B 3/02, B62B 3/00

(54) **ROLLING CONTAINER WITH UPWARD FOLDABLE BOTTOM PART**
ROLLBEHÄLTER MIT NACH OBEN FALTBAREM BODENTEIL
CONTENEUR ROULANT AVEC UNE PARTIE INFÉRIEURE PLIABLE VERS LE HAUT

(30) Priority: 19.10.2016 NL 2017642
(43) Date of publication of application: 25.04.2018
(73) Proprietor: Hoza Holding B.V., 9679 TC Scheemda (NL)
(72) Inventor: Bouma, Harm, 9636 CK Zuidbroek (NL)
(74) Representative: Arnold & Siedsma

(56) References cited:
- EP-A1- 2 508 408
- CN-U- 205 469 183
- FR-A1- 2 713 577
- FR-A2- 2 355 989
- US-A- 4 768 806
- US-B1- 6 443 481

## Description

The present invention relates to a rolling container for transporting goods. Such rolling containers are used, among other purposes, for supply and discharge of products within and between businesses.

Diverse types of rolling container for transporting goods are known in practice. These rolling containers make use here of a carrier platform on which goods can be placed. The rolling containers are further usually provided with two side walls, for instance in the form of two wire meshes, which are placed at or on this carrier platform. Wheels are further provided in order to enable displacement. For the purpose of transport or storage of empty rolling containers, rolling containers are known wherein the carrier platform can be removed or folded upward. This enables the side walls of the rolling container to be moved toward each other, whereby the volume of the rolling container is considerably reduced for transport and/or storage. This makes transport and storage possible in effective manner.

US 6 443 481 B1 relates to a collapsible movable cart having a collapsible frame.

US 4 768 806 A relates to a collapsible trailer having a platform made of two longitudinal sections which folds against each other along its central longitudinal axis.

CN 205 469 183 U relates to a connecting and stabilizing mechanism of a foldable cart.

A problem in collapsing or folding in of rolling containers is that this is not always performed in controlled manner. The rolling container may become damaged hereby, which may jeopardize the functioning of the rolling container. This limits the utility of the rolling container in question and/or increases maintenance costs. Additional operations are also required and/or the operations for handling the rolling containers require more time.

The present invention therefore has for its object to obviate or at least reduce the above stated problems.

The present invention provides for this purpose a rolling container according to claim 1.

By providing the rolling container with a frame with a number of wheels, wherein a wheel is preferably provided on each corner point of the rolling container, the rolling container is easily displaceable. In the situation of use the bottom part functions as carrier platform on which goods are placeable. A cargo or a number of goods can hereby be displaced in effective manner. By providing the bottom part movably between a folded-down situation of use, in which the rolling container is folded out, and an upward-folded state in which the rolling container is in a folded-in state, the rolling container can be brought into a compact folded-in state after use for the purpose of "empty" transport and/or storage.

According to the invention, the bottom part is pivotally connected to the frame.

According to the invention, a support part is further provided which is movably connected via a bottom connection to the bottom part. This support part is provided with a rotation shaft, with which it is pivotally connected to the frame of the rolling container. One side of the frame is connected here to the movable bottom part and the other, opposite side of the frame is connected to the support part. According to the invention, the support part is configured such that it supports the bottom part during the movement of the bottom part between the folded-out situation of use and the folded-in state of the rolling container. It it is possible to provide the support part in different embodiments. It is thus for instance possible to provide the support part as one whole or from two or more sub-parts, if desired with individual rotation shafts.

By providing a support part the bottom part is supported during substantially the whole movement of the bottom part from the situation of use to the folded-in state and vice versa. According to the invention, the support part is likewise moved upward during the upward movement of the bottom part. Since a side of the bottom part is connected to the frame on the first side of the rolling container and one side of the support part is connected to the opposite side of the frame of the rolling container, the two sides will be moved toward each other, particularly be pulled toward each other, during the upward movement of the bottom part and the support part connected thereto. The rolling container according to the invention is therefore folded in during the upward movement. This enables a controlled movement, which counteracts, among other things, the rolling container being pressed askew.

When the folded-in rolling container is brought into the situation of use, the bottom part is pressed downward, whereby the support part is also moved downward, so that the two opposite sides of the frame of the rolling container are pressed outward. A controlled movement is therefore also possible here.

A controlled movement is therefore performed during both movements, wherein the sides of the rolling container are moved toward each other, or are conversely moved apart, in effective manner. As stated, the pressing askew of the rolling container is therefore avoided hereby. This reduces the risk of, among other things, damage to the rolling container.

A further advantage is that the rolling container according to the invention can be folded in or be brought into the situation of use in effective manner. It is for instance possible here to move the bottom part upward or downward with one hand. An effective transition between the different states of the rolling container is hereby possible, whereby this operation can be performed in effective manner and in a short time. This makes the overall transport process more efficient.

According to the invention the bottom connection comprises a pivot shaft. The angle between the plane of the support part and the plane of the bottom part can here be changed in effective manner during folding in or folding out of the rolling container according to the invention. The bottom part and the support part here perform a relative pivoting movement around this pivot shaft.

In this way an unambiguous movement can be achieved during the transition between the different states of the rolling container according to the invention. A transition between the different states can also be realized by a user in simple manner by exerting a small force, for instance with one hand.

In an alternative embodiment according to the invention the bottom connection comprises a guide. A relative movement between the bottom part and the support part is likewise made possible here, wherein a relative rotation is achieved. A translating movement is however also made possible. It is however currently preferred to provide the bottom connection with a pivot shaft.

According to the invention, the bottom connection is provided at a centre line of the bottom part.

Providing the bottom connection, preferably the pivot shaft, centrally achieves that in a folded-in state, i.e. a transport state or storage state of the rolling container, the plane of the bottom part and the plane of the support part extend substantially upward, i.e. substantially vertically, and are situated substantially parallel to each other herein. This achieves that the two sides of the rolling container are pulled toward each other by the upward movement of the bottom part and the support part and the two sides likewise extend parallel to each other and are preferably even situated wholly or almost wholly adjacently of or against each other. The volume of the rolling container in the folded-in state is hereby limited. This enables efficient storage and transport with the rolling container according to the invention.

In a situation of use the plane of the support part and the plane of the bottom part are also situated parallel to each other substantially in a horizontal direction. It is hereby even possible for the support part to impart additional support and strength to the bottom part in the situation of use. Providing the bottom connection centrally therefore achieves an unambiguous position in the situation of use and an unambiguous position in the folded-in state, wherein both the bottom part and the support part are provided respectively horizontally and substantially vertically.

According to the invention the frame provided with two sides.

Providing additional sides on the frame achieves that an additional strengthening for the bottom part is provided in the situation of use. Relatively heavy goods can hereby be transported with the rolling container according to the invention, while the rolling container is extremely compact in the folded-in state.

The bottom part is preferably provided with a plastic material, for instance a polyethylene, polypropylene, polyamide or other suitable plastic. It has been found that a light-weight bottom part can hereby be provided, whereby transport costs can be further reduced. The container can moreover be handled in effective manner using small forces. This then also increases the user-friendliness of the rolling container.

According to an embodiment of the invention the sides are side walls arranged on or at the frame. The goods can hereby be transported with the rolling container in effective manner. Such side walls preferably have a wire mesh configuration or take the form of a wire screen. It will be apparent that the use of other types of side wall is likewise possible.

Further advantages, features and details of the invention are elucidated on the basis of preferred embodiments thereof, wherein reference is made to the accompanying drawings, in which:
- figure 1 shows a view of the rolling container according to the invention in a situation of use;
- figures 2 and 3 show views of the rolling container of figure 1 during the transition from the situation of use to the folded-in state;
- figure 4 shows a view of the rolling container of figure 1 in a folded-in state; and
- figure 5 shows a view of an alternative rolling container according to the invention.

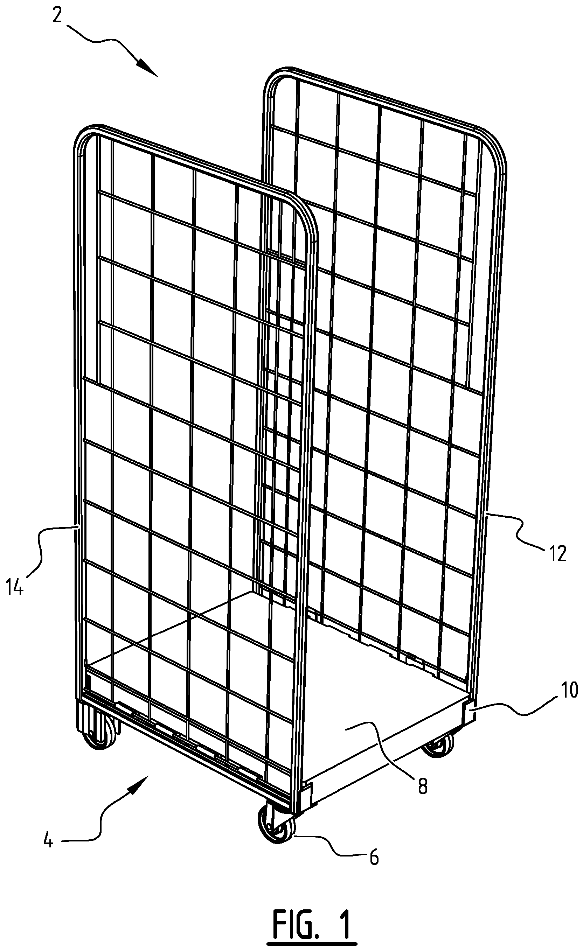

Rolling container 2 (figure 1) comprises frame 4 with a number of wheels 6. In the shown embodiment a wheel 6 is provided on each corner point of frame 4. Also provided is bottom part 8 which in the situation of use rests on frame 4. A number of supports 10 are here arranged on frame 4. In the shown embodiment of rolling container 2 first side wall 12 and second side wall 14 are further arranged on frame 4.

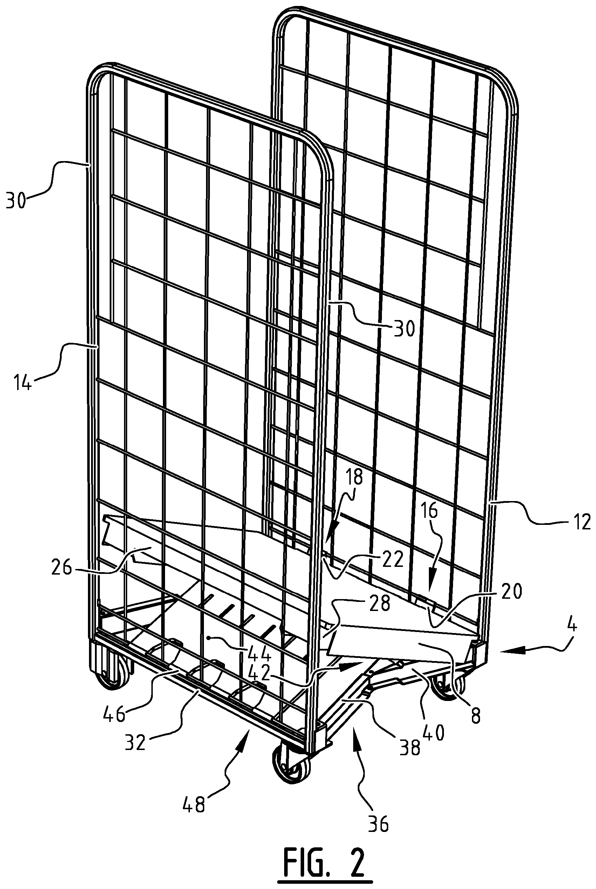

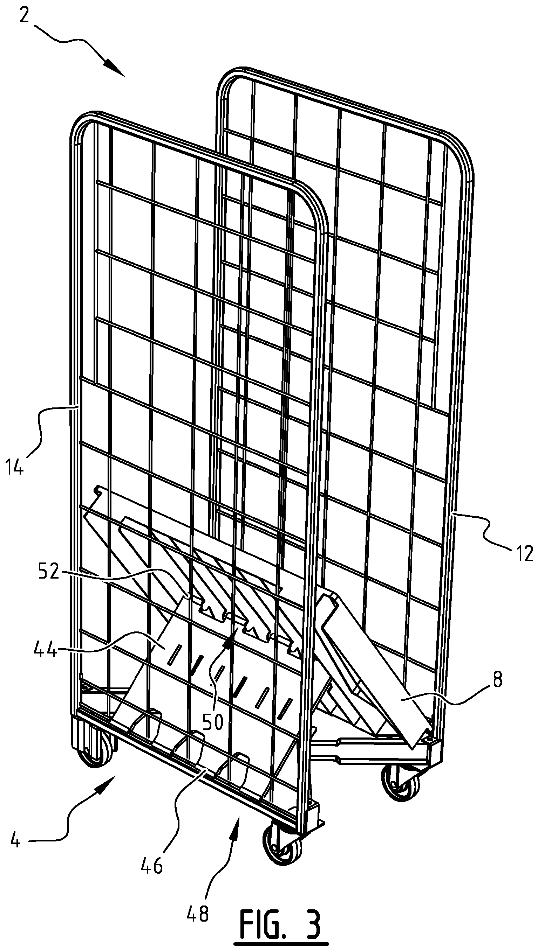

During movement of bottom part 8 (figures 2 and 3), bottom part 8 rotates using two hinges 16 and 18 which are connected via side wall 12 to frame 4. Hinges 16 and 18 are here connected to bottom part 8 using supports 20, 22. It will be apparent that a different configuration for hinges 16, 18 according to the invention is likewise possible. Hinges 16, 18 are situated on first side 24 of bottom part 8. In the shown embodiment two recesses 28 are arranged on other side 26, particularly on the corner points thereof, whereby it is possible to, as it were, pass upright 30 of side wall 14 during movement of bottom part 8. In a situation of use bottom part 8 rests with side 26 on support 32 of frame 4. In the shown embodiment sides rest on side parts 36. Side parts 36 consist of first sub-part 38 and second sub-part 40. Sub-parts 38, 40 are mutually connected to hinge element 42, the rotation shaft of which extends substantially in vertical direction.

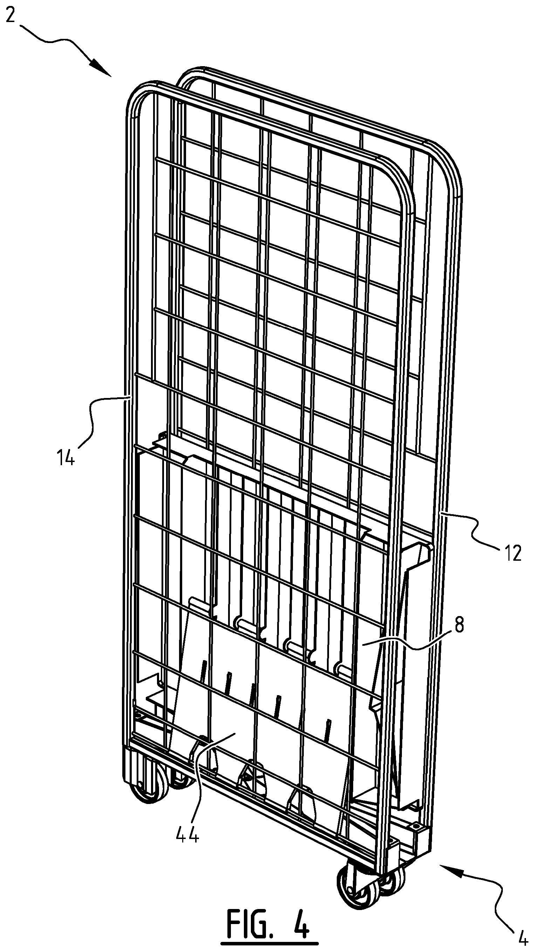

In the shown embodiment support part 44 is arranged via side wall 14 on frame 4 via four hinge elements 46. Hinges 46 are situated on first side 48 of support part 44. In the shown embodiment four hinge elements 52 are situated on other side 50 of support part 44 close to bottom part 8. The rotation shafts of hinge elements 46, 52 extend in a substantially horizontal direction. In the shown embodiment hinge elements 52 are provided centrally between side walls 12, 14. This means that the minimum distance between hinge elements 52 and side walls 12, 14 is substantially the same in the situation of use (figure 1), the folded-in state (figure 4), and intermediate states (figures 2 and 3).

In folded-in state of rolling container 2 (figure 4) support part 44 and bottom part 8 are oriented substantially in a vertical direction and are substantially parallel to each other herein. The two side walls 12, 14 have here been placed almost wholly against each other, wherein the two sub-parts 38, 40 of side parts 36 have been rotated substantially against each other using hinge 42.

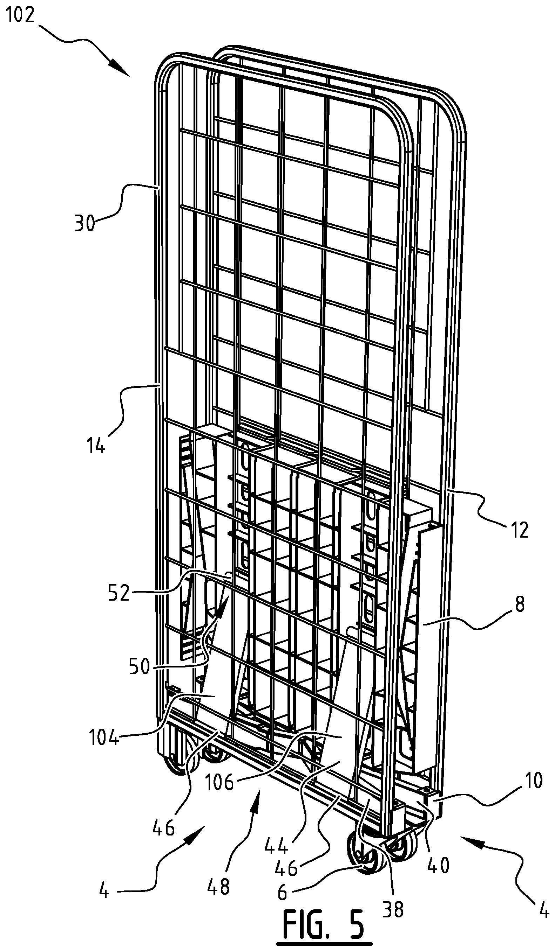

In an alternative embodiment of rolling container 102 (figure 5) support part 44 is provided in the form of a number of sub-parts 104, 106. Other components are designated with the same reference numerals as for the above described rolling container 2. The two rolling containers 2, 102 work in the same way.

For folding in of rolling container 2, 102 bottom part 8 is moved upward from the situation of use (figure 1). By lifting bottom part 8 (figures 2 and 3) support part 44 with end 50 is also moved upward. Bottom 8 and support part 44 perform a relative rotation around hinge element 52 here. Bottom part 8 makes a rotating movement around hinges 16, 18. Support part 44 further makes a rotating movement around hinge element 46. Side parts 36 are further collapsed by the upward movement of bottom part 8. In the shown embodiment this collapsing is performed by an inward movement, particularly an inward rotation, of sub-parts 38, 40, wherein the outer ends thereof are mutually connected via hinge element 42. By pulling side 26 of bottom part 8 all the way up sides 12, 14 are pulled all the way toward each other, whereby rolling container 2 is folded in (figure 4). When taking a rolling container 2 into use from folded-in state (figure 4) a reverse process is performed until rolling container 2 is in the situation of use (figure 1), wherein bottom part 8 and support part 44 lie substantially in a horizontal plane.

The present invention is by no means limited to the above described embodiments thereof. The invention is defined by the appended claims.

## Claims

1. Rolling container (2), comprising:
- a frame (4) provided with a number of wheels (6) and two sides (12, 14);
- a bottom part (8) functioning as carrier platform and provided movably relative to the frame (4), wherein the frame (4) is provided with a rotation shaft with a rotation axis to which the bottom part (8) is pivotably connected, wherein the bottom part (8) is movable between a folded-down situation of use and an upward-folded state, and the bottom part (8) is connected to the first side (12) by the rotation shaft,;
- a support part (44) movably connected to the frame (4) is movably connected via a bottom connection (52) that comprises a pivot shaft to the bottom part (8), the support part (44) is connected to the second side (14), and wherein the support part (44) is configured to support the bottom part (8) during movement of the bottom part (8) between the situation of use and the upward-folded state, such that the sides (12, 14) are pulled toward each other by the bottom part (8) being pulled upward, whereby the rolling container (2) is folded in, and wherein the support part (44) imparts additional support and strength to the bottom part (8) in the situation of use, wherein in the folded-down situation of use a plane of the bottom part (8) and a plane of the support part (44) are situated parallel to each other substantially in a horizontal direction, wherein in the upward-folded state the plane of the bottom part (8) and the plane of the support part (44) are situated parallel to each other and extend substantially in a vertical direction, wherein the bottom connection (52) is provided at a centre line of the bottom part (8), **characterized in that** the frame (4) is provided with two side parts (36), wherein the sides of the bottom part (8) rest on the side parts (36) in the folded down situation.

2. Rolling container (2) as claimed in claim 1, wherein the bottom connection (52) of the support part (44) comprises a guide.

3. Rolling container (2) as claimed in any one of the foregoing claims, wherein the bottom part (8) is of a plastic material.

4. Rolling container (2) as claimed in any one of the foregoing claims, wherein the sides (12, 14) are side walls arranged on or at the frame (4).

## Patentansprüche

1. Rollbehälter (2), umfassend:
- einen Rahmen (4), der mit einer Anzahl von Rädern (6) und zwei Seiten (12, 14) versehen ist;
- ein Unterteil (8), das als Trägerplattform dient und relativ zu dem Rahmen (4) bewegbar bereitgestellt ist, wobei der Rahmen (4) mit einer Drehwelle mit einer Drehachse versehen ist, mit der das Unterteil (8) schwenkbar verbunden ist, wobei das Unterteil (8) zwischen einer heruntergeklappten Gebrauchssituation und einem hochgeklappten Zustand bewegbar ist und das Unterteil (8) durch die Drehwelle mit der ersten Seite (12) verbunden ist;
- ein bewegbar mit dem Rahmen (4) verbundenes Stützteil (44) ist über eine Unterverbindung (52), die eine Schwenkwelle umfasst, mit dem Unterteil (8) bewegbar verbunden, wobei das Stützteil (44) mit der zweiten Seite (14) verbunden ist, und wobei das Stützteil (44) konfiguriert ist, um das Unterteil (8) während einer Bewegung des Unterteils (8) zwischen der Gebrauchssituation und dem hochgegeklappten Zustand derart zu stützen, dass die Seiten (12, 14) durch ein Hochziehen des Unterteils (8) aufeinander zugezogen werden, wobei dadurch der Rollbehälter (2) eingeklappt wird, und wobei das Stützteil (44) dem Unterteil (8) in der Gebrauchssituation zusätzliche Stützung und Festigkeit verleiht, wobei in der heruntergeklappten Gebrauchssituation eine Ebene des Unterteils (8) und eine Ebene des Stützteils (44) im Wesentlichen in einer horizontalen Richtung parallel zueinander liegen, wobei in dem hochgeklappten Zustand die Ebene des Unterteils (8) und die Ebene des Stützteils (44) parallel zueinander liegen und sich im Wesentlichen in eine vertikale Richtung erstrecken, wobei die Unterverbindung (52) an einer Mittellinie des Unterteils (8) bereitgestellt ist, **dadurch gekennzeichnet, dass** der Rahmen (4) mit zwei Seitenteilen (36) versehen ist, wobei die Seiten des Unterteils (8) in der heruntergeklappten Situation auf den Seitenteilen (36) aufliegen.

2. Rollbehälter (2) nach Anspruch 1, wobei die untere Verbindung (52) des Stützteils (44) eine Führung umfasst.

3. Rollbehälter (2) nach einem der vorstehenden Ansprüche, wobei das Unterteil (8) aus einem Kunststoffmaterial besteht.

4. Rollbehälter (2) nach einem der vorstehenden Ansprüche, wobei die Seiten (12, 14) Seitenwände sind, die auf oder an dem Rahmen (4) angeordnet sind.

## Revendications

1. Conteneur roulant (2), comprenant :
- un cadre (4) pourvu d'un certain nombre de roues (6) et de deux côtés (12, 14) ;
- une partie inférieure (8) fonctionnant comme plate-forme de support et mobile par rapport au cadre (4), dans lequel le cadre (4) est pourvu d'un arbre de rotation avec un axe de rotation auquel la partie inférieure (8) est reliée de manière pivotante, dans lequel la partie inférieure (8) est mobile entre une situation d'utilisation repliée vers le bas et un état replié vers le haut, et la partie inférieure (8) est reliée au premier côté (12) par l'arbre de rotation ;
- une pièce support (44) reliée de manière mobile au cadre (4) est reliée de manière mobile à la partie inférieure (8) via une liaison inférieure (52) qui comprend un arbre pivot, la pièce support (44) est reliée au second côté (14), et dans lequel la pièce support (44) est configurée pour soutenir la partie inférieure (8) pendant le mouvement de la partie inférieure (8) entre la situation d'utilisation et l'état replié vers le haut, de telle sorte que les côtés (12, 14) sont tirés l'un vers l'autre par la partie inférieure (8) tirée vers le haut, le conteneur roulant (2) étant ainsi replié, et dans lequel la pièce support (44) offre un support et une résistance supplémentaires à la partie inférieure (8) dans la situation d'utilisation, dans lequel, dans la situation d'utilisation repliée vers le bas, un plan de la partie inférieure (8) et un plan de la pièce support (44) sont situés parallèlement l'un à l'autre sensiblement dans une direction horizontale, dans lequel, dans l'état replié vers le haut, le plan de la partie inférieure (8) et le plan de la pièce support (44) sont situés parallèlement l'un à l'autre et s'étendent sensiblement dans une direction verticale, dans lequel la liaison inférieure (52) est prévue au niveau d'une ligne centrale de la partie inférieure (8), **caractérisé en ce que** le cadre (4) est pourvu de deux pièces latérales (36), dans lequel les côtés de la partie inférieure (8) reposent sur les pièces latérales (36) dans la situation repliée vers le bas.

2. Conteneur roulant (2) selon la revendication 1, dans lequel le raccord inférieur (52) de la pièce support (44) comprend un guide.

3. Conteneur roulant (2) selon l'une quelconque des revendications précédentes, dans lequel la partie inférieure (8) est en matière plastique.

4. Conteneur roulant (2) selon l'une quelconque des revendications précédentes, dans lequel les côtés (12, 14) sont des parois latérales disposées sur ou au niveau du cadre (4).
